(19) **Europäisches Patentamt / European Patent Office / Office européen des brevets**

(11) **EP 1 101 316 B1**

(12) **FASCICULE DE BREVET EUROPEEN**

(45) Date de publication et mention de la délivrance du brevet:
**14.12.2011 Bulletin 2011/50**

(21) Numéro de dépôt: **99932915.4**

(22) Date de dépôt: **20.07.1999**

(51) Int Cl.:
**H04L 7/033** *(2006.01)*

(86) Numéro de dépôt international:
**PCT/FR1999/001768**

(87) Numéro de publication internationale:
**WO 2000/007324 (10.02.2000 Gazette 2000/06)**

(54) **PROCEDE DE RECUPERATION D'HORLOGE LORS DE L'ECHANTILLONNAGE DE SIGNAUX DE TYPE NUMERIQUE**

VERFAHREN ZUR TAKTRÜCKGEWINNUNG WÄHREND DER ABTASTUNG VON DIGITALEN SIGNALEN

CLOCK RECOVERY METHOD IN DIGITAL SIGNAL SAMPLING

(84) Etats contractants désignés:
**DE FR GB**

(30) Priorité: **30.07.1998 FR 9809744**

(43) Date de publication de la demande:
**23.05.2001 Bulletin 2001/21**

(73) Titulaire: **THOMSON multimedia
92100 Boulogne Billancourt (FR)**

(72) Inventeur: **JOUET, Pierrick
92648 Boulogne Cedex (FR)**

(74) Mandataire: **Zhang, Jianguo
Technicolor
1-5 rue Jeanne d'Arc
92130 Issy-les-Moulineaux (FR)**

(56) Documents cités:
EP-A- 0 020 205    EP-A- 0 345 564
EP-A- 0 614 281    EP-A- 0 812 079
WO-A-91/19358      US-A- 4 280 099

**Description**

La présente invention concerne un dispositif de synchronisation d'une horloge d'échantillonnage pour l'échantillonnage de signaux de type numérique. Ce dispositif permet notamment de récupérer l'horloge lors de l'échantillonnage de signaux vidéos issus d'un dispositif informatique tel qu'une carte graphique.

L'échantillonnage de signaux vidéos issus d'une source analogique est bien connu. Il utilise le théorème de Shannon-Nyquist. D'après ce théorème, si la bande passante d'un signal est limitée à un domaine de fréquence tel que [0, Fmax], il est nécessaire et suffisant d'échantillonner ce signal à une fréquence minimale 2 x Fmax pour être capable de le reconstruire à partir de ces échantillons. Cette contrainte se traduit par l'introduction de filtres passe-bas qui ont pour but de limiter le spectre des signaux avant échantillonnage. Dans ce cas, la phase du signal d'horloge n'a pas d'importance dans le processus d'échantillonnage. En effet, un même signât échantillonné par deux horloges de même fréquence mais déphasé contient tes mêmes informations à un retard constant près.

Il n'en est pas de même lorsque l'on doit échantillonner des signaux vidéos issus d'un dispositif informatique, à savoir des signaux d'origine numérique. En effet, le spectre de ces signaux est très large et ils sont destinés à être visualisés avec une résolution la plus élevée possible. En conséquence, la bande passante ne doit pas être limitée, car il y aurait une perte de finesse. Or, si l'on doit injecter des signaux de ce type dans un dispositif qui comporte un étage d'échantillonnage, l'on est confronté aux problèmes suivants :

- Si l'on filtre le signal incident pour limiter sa bande passante et satisfaire aux critères de Nyquist, la réponse du filtre 6 des signaux de type numérique présentant des transitions raides entraînera des suroscillations très préjudiciables à la netteté des caractères.
- Si l'on filtre peu le signal incident pour éviter la suroscillation, l'atténuation apportée aux composantes fréquentielle sera insuffisante pour éviter un repliement de spectre également préjudiciable.
- Si l'on échantillonne sans filtrage préalable le signal incident, il est impératif d'adopter non seulement la fréquence exacte qui a servi à générer le signal, mais également une phase d'échantillonnage correspondant au milieu de chaque palier.

Le problème est d'autant plus complexe qu'il n'existe pas de standard fixe prédéfini dans ce domaine. En effet, pour l'affichage de signaux vidéos issus d'une carte graphique, seuls sont définis te nombre de pixels actifs par ligne de la source et le nombre de lignes actives par image de la source. En conséquence, le nombre total de pixels par ligne, le nombre total de lignes ainsi que la fréquence-image et la fréquence-pixel ne sont pas normalisés. De même, la phase du premier pixel actif par rapport au front de l'horloge de synchronisation n'est pas définie, ni en ligne ni en image.

Il est connu de l'état de la technique, notamment des brevets EP0020205 (au nom de THOMSON-CSF), WO91/19358 (au nom de MOTOROLA Inc.) et EP0812079 (au nom de MATSUSHITA), différents procédés permettant de récupérer de façon automatique les paramètres de fréquence et de phase d'une horloge d'échantillonnage et d'utiliser ces paramètres soit pour la synchronisation de l'horloge ou pour la détection de présence ou d'absence d'un signal.

La présente invention concerne plus particulièrement un dispositif de synchronisation d'échantillonnage utilisé pour l'échantillonnage de signaux numériques.

La présente invention a pour objet un dispositif de synchronisation d'une horloge d'échantillonnage utilisée pour l'échantillonnage de signaux numériques (DATA) comportant une boucle à verrouillage de phase ou PLL qui multiplie un signal à une fréquence donnée par un nombre entier, la PLL recevant en entrée un signal de référence et donnant en sortie un signal d'horloge, caractérisé en ce qu'il comporte des moyens élaborant n zones d'analyse recevant en entrée le signal d'horloge et donnant en sortie des signaux déterminant les n zones d'analyse, des moyens d'analyse recevant en entrée les signaux numériques (DATA) et les signaux déterminant les n zones d'analyse, lesdits moyens d'analyse comparant, pendant un temps déterminé, les signaux numériques aux signaux déterminant les n zones d'analyse, accumulant par zone les résultats de la comparaison puis testant les résultats des accumulations de manière à envoyer soit un signal de correction de phase en entrée d'un comparateur dont l'autre entrée reçoit le signal de référence et dont la sortie est connectée en entrée de la PLL, soit un signal de correction de fréquence envoyée en entrée de la PLL pour modifier le nombre entier.

Selon différents modes de réalisation, les moyens élaborant n zones d'analyse comportent un circuit en logique combinatoire traitant le signal d'horloge issu de la PLL pour générer des fenêtres en logique combinatoire réalisant les n zones d'analyse, les fenêtres correspondant respectivement aux transitions montantes et descendantes du signal d'horloge.

Les moyens élaborant n zones d'analyse élaborent quatre zones avec une zone correspondant à une transition montante, une zone correspondant à une transition descendante, une zone correspondant à un palier haut et une zone correspondant à un palier bas.

Les moyens d'analyse sont constitués par un circuit électronique programmable effaçable, les moyens d'analyse comportent au moins un compteur pour chaque zone qui accumule le nombre de transitions par zone, chaque compteur étant initialisé en début de temps d'analyse et pouvant compter jusqu'à une valeur d'accumulation maximale, un circuit d'analyse connecté en sortie de chaque compteur et un circuit de test connecté en sortie de l'ensemble des circuits d'analyse, le circuit de test envoyant des signaux vers un compteur dont la sortie est envoyée sur un circuit déterminant la valeur du signal de correction de fréquence et vers un circuit à modulation d'impulsion déterminant la valeur du signal de correction de phase, le circuit à modulation d'impulsions comporte un compteur/décompteur et un compteur comptant entre 0 et une valeur maximale donnée.

le circuit de test compare les valeurs en sortie de chaque circuit d'analyse et détermine en fonction des valeurs relatives en sortie de deux circuits d'analyse différents ou de la valeur en sortie d'un circuit d'analyse différent d'un circuit d'analyse spécifique correspondant au type de transition choisi, le sens et l'amplitude de la correction de phase ou de fréquence à appliquer sur le signal d'horloge.

Le dispositif comporte des circuits de mise en forme recevant en entrée les signaux numériques et dont la sortie est connectée à une entrée des moyens d'analyse.

D'autres caractéristiques et avantages de la présente invention apparaîtront à la lecture faite ci-après d'un mode de mise en oeuvre préférentiel avec référence aux dessins ci-annexés dans lesquels :

> La figure 1 est un synoptique d'un dispositif conforme à la présente invention,
> La figure 2 représente les différents tests réalisés conformément au procédé de la présente invention,
> La figure 3 représente un synoptique du circuit logique programmable effaçable ou EPLD, et
> La figure 4 est une représentation de la machine d'état permettant d'implémenter dans le circuit logique programmable effaçable ou EPLD le procédé de ta présente invention.

Pour simplifier la description dans les figures, tes mêmes éléments portent les mêmes références.

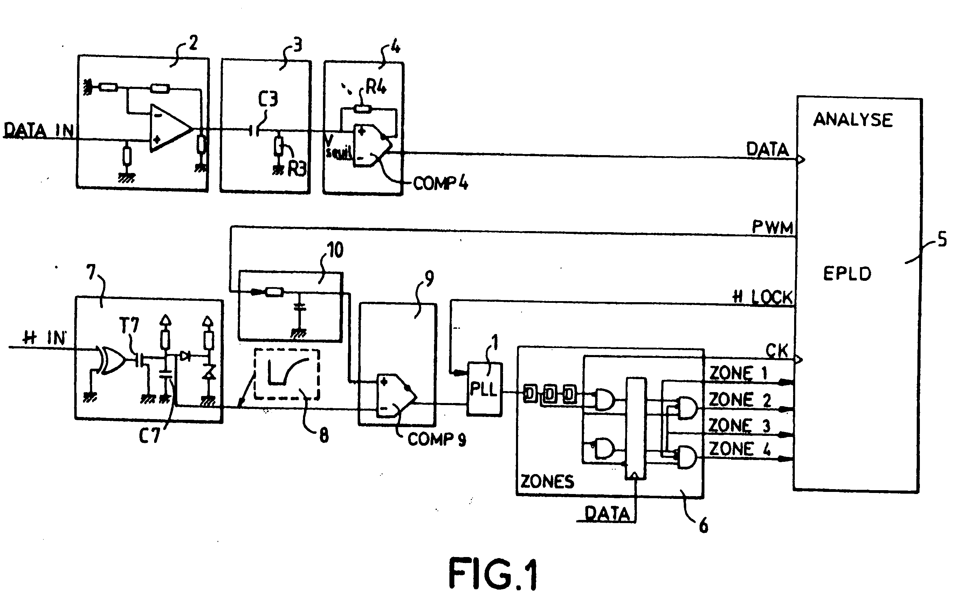

Le circuit représenté à ta figure 1 permet d'analyser la position des informations entrantes, à savoir des signaux de type numérique DATA IN par rapport à l'horloge CK issue de la boucle à verrouillage de phase ou PLL1. Pour mettre en oeuvre cette analyse, les signaux de type numérique DATA IN sont envoyés sur un circuit de réception 2 comportant de manière connue un amplificateur. En sortie de ce circuit 2, les signaux de type numérique sont mis en forme pour obtenir des signaux logiques, plus particulièrement des signaux de type TTL. Les circuits de mise en forme comportent plus particulièrement un différentiateur 3 constitué de manière connue d'une capacité C3 et d'une résistance R3. La capacité C3 est montée en série entre la sortie du circuit de réception 2 et la sortie du différentiateur 3, la résistance R3 étant montée entre le point de sortie du différentiateur 3 et la masse. Le différentiateur est suivi d'un circuit de mise en forme proprement dit formé essentiellement d'un comparateur COMP4 recevant sur son entrée positive la sortie du différentiateur 3 et sur son entrée négative une tension de comparaison $V_{seuil}$ fixée à une tension positive proche de OV. D'autre part, pour éviter un déclenchement intempestif du comparateur en présence de signaux issus du différentiateur dont le niveau est égal à $V_{seuil}$, la sortie inversée du comparateur COMP4 est rebouclée par l'intermédiaire d'une résistance R4 sur l'entrée positive dudit comparateur. Les signaux logiques DATA issus du circuit de mise en forme 4 sont envoyés sur un circuit d'analyse ou circuit logique programmable effaçable EPLD 5. Ce circuit sera décrit en détail ci-après.

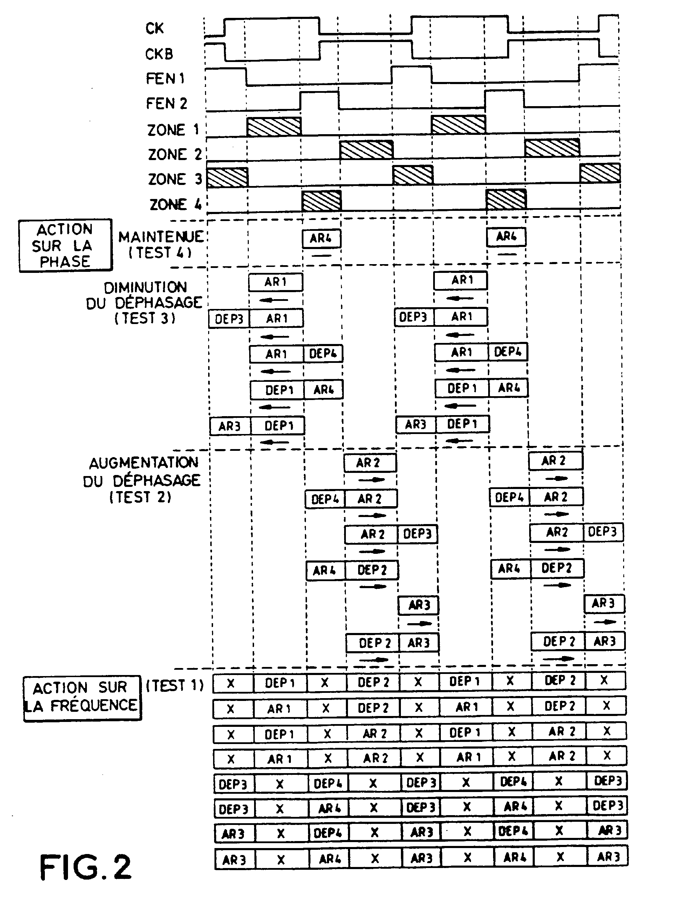

D'autre part, la boucle à verrouillage de phase ou PLL 1 reçoit un signal de synchronisation H IN. Ce signal de synchronisation passe à travers un circuit de réception 7 de type connu comportant essentiellement un transistor FET T7 et une capacité C7 montée en parallèle sur la sortie dudit transistor. De ce fait, le signal H IN charge la capacité à travers ledit transistor T7 et on obtient en sortie un signal tel que représenté en 8 avec le front montant du signal, image de la charge de la capacité ayant une forme exponentielle. Ce signal 8 est envoyé en entrée d'un circuit de mise en forme 9 constitué par un comparateur COMP9. Ce signal 8 est appliqué sur la borne négative du comparateur tandis que la borne positive reçoit un signal issu d'un circuit de filtrage 10 qui reçoit en entrée un signal PWM pour "Pulse Width Modulation" dont l'obtention sera expliquée ultérieurement. Ainsi une variation du signal vers l'entrée positive du comparateur COMP9 permet de retarder le signal servant de référence à la PLL1 et par la même de modifier la phase de l'horloge CK. La PLL1 est un circuit classique intégrant un comparateur de phase et un oscillateur contrôlé en tension ou VCO. En sortie de la PLL1 est prévu un circuit 6 permettant d'élaborer les zones d'analyse, à savoir les fenêtres. Ce circuit pourrait être intégré dans l'EPLD 5. Le circuit 6 est un circuit constitué de circuits à retard D et de différentes portes logiques permettant de générer des fenêtres FEN1 et FEN2 en logique combinatoire à partir de l'horloge CK et de réaliser ainsi les quatre zones d'analyse, à savoir la zone 1 qui correspond à un palier haut, la zone 2 qui correspond à un palier bas, la zone 3 qui correspond à une transition montante et la zone 4 qui correspond à une transition descendante, comme représenté dans la partie haute de la figure 2. En fait, de la largeur des fenêtres FEN1 et FEN2 centrées autour des transitions montante et descendante va dépendre la précision du système. Ainsi, plus la fenêtre FEN2, correspondant à la transition descendante sera étroite, plus le système sera précis.

Le procédé de récupération d'horloge conforme à la présente invention consiste donc à analyser les transitions des signaux de type numérique DATA par rapport aux transitions montante et descendante de l'horloge CK. Comme mentionné ci-dessus, cette analyse est réalisée en utilisant les fenêtres FEN1 et FEN2 qui permettent de déterminer des zones d'analyse, à savoir les zones 1, les zones 2, les zones 3 et les zones 4. Ainsi, pendant un temps d'analyse déterminé, on accumule dans les différentes zones l'information de phase entre les signaux logiques DATA et les différentes zones. A la fin du temps déterminé, les résultats de l'accumulation sont exploités pour en déduire une éventuelle correction de phase et/ou de fréquence. Les répartitions possibles dans les différentes zones sont représentées à la figure 2. Si toutes les informations accumulées se trouvent dans la zone 4, à savoir la zone de la transition descendante, comme symbolisé par AR4 sur la figure 2, on en déduit que le signal CK est en phase avec les signaux logiques DATA et aucune action sur la phase n'est réalisée. Si des informations se trouvent uniquement dans la zone 1, à savoir la zone de palier haut, comme représenté par AR1 sur la figure 2, on en déduit qu'une diminution de phase doit être réalisée. De même, si des informations sont prévues dans la zone 1 (AR1) et dans la zone 3 (DEP3) mais que le niveau de cumul est atteint dans la zone 1 (AR1). Il en est ainsi aussi lorsque des informations sont présentes dans la zone 1 et dans la zone 4 mais que le cumul est atteint dans la zone 1 ou que des informations sont présentes dans la zone 1 et dans la zone 4 et que le cumul est atteint dans la zone 4 ou encore que des informations sont présentes dans la zone 3 et dans la zone 1 et que le cumul est atteint dans la zone 3. Ceci est symbolisé par ARi pour le niveau de cumul atteint dans une zone et DEPi pour la présence d'information dans une zone.

A l'inverse, on réalisera une augmentation du déphasage lorsque les résultats d'accumulation suivants sont atteints. Les informations ne sont présentes que dans la zone 2, à savoir la zone de palier bas. Des informations sont présentes dans la zone 4 et dans la zone 2 mais le cumul est atteint dans la zone 2. Des informations sont présentes dans la zone 2 et dans la zone 3, le niveau de cumul étant atteint dans la zone 2. Des informations sont présentes dans la zone 4 et dans la zone 2, le niveau de cumul étant atteint dans la zone 4. Des informations sont présentes uniquement dans la zone 3 avec un niveau de cumul atteint dans cette zone et des informations sont présentes dans la zone 2 et dans la zone 3 avec le niveau de cumul atteint dans la zone 3.

Une action sur la fréquence sera effectuée lorsque des informations seront présentes dans deux zones non-adjacentes. Ainsi, comme représenté dans le bas de la figure 2, des informations peuvent être présentes dans la zone 1 et dans la zone 2 sans atteindre le niveau de cumul ou des informations peuvent être présentes dans la zone 1 et dans la zone 2 avec un niveau de cumul atteint dans la zone 2 ou des informations peuvent être présentes dans la zone 1 et dans la zone 2 avec un niveau de cumul atteint dans la zone 2. Le niveau de cumul peut être atteint à la fois dans la zone 1 et dans la zone 2, les informations peuvent être présentes dans la zone 3 et dans la zone 4 sans niveau de cumul atteint. Les informations peuvent être présentes dans la zone 3 et dans la zone 4 avec un niveau de cumul atteint dans la zone 4. Des informations peuvent être présentes dans la zone 3 et dans la zone 4 avec un niveau de cumul atteint dans la zone 3 et des informations peuvent être présentes dans la zone 3 et dans la zone 4 avec le niveau de cumul atteint dans les zones 3 et 4.

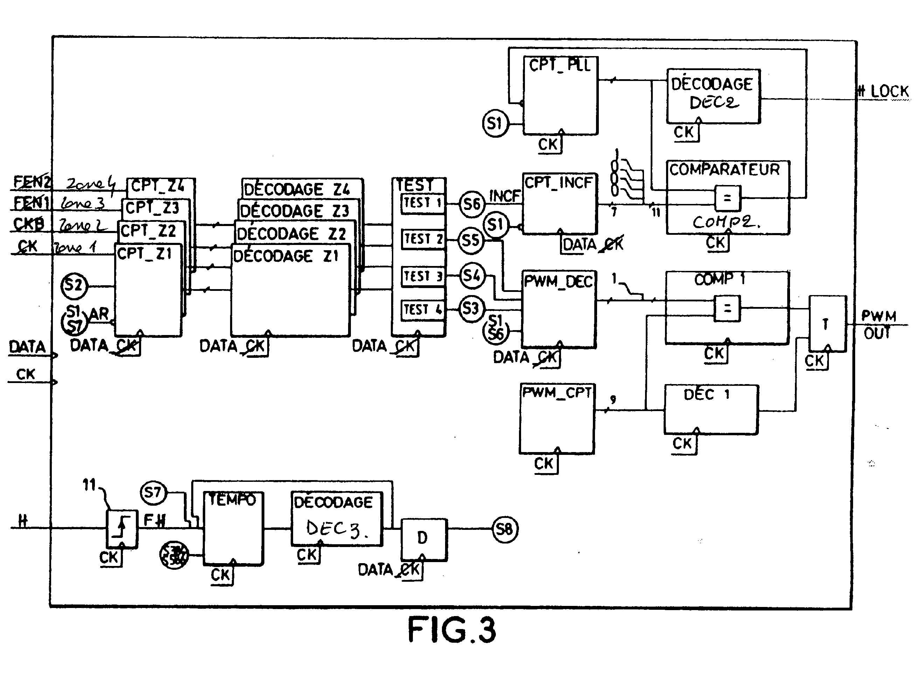

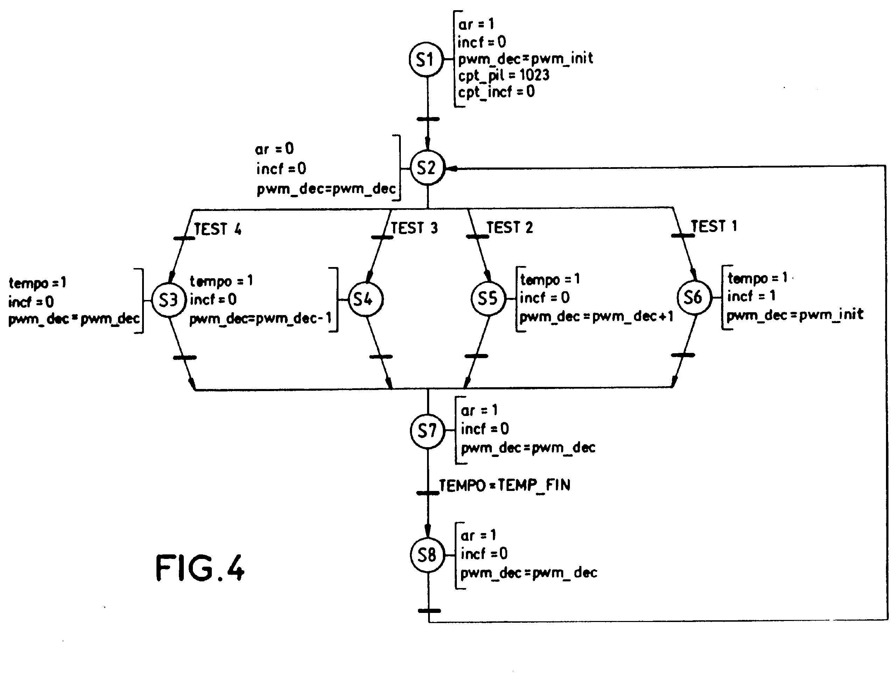

Le procédé ci-dessus peut être mis en oeuvre dans un circuit logique programmable EPLD tel que représenté sur la figure 3 en utilisant une machine d'état dont une représentation symbolique est donnée à la figure 4. L'accumulation de l'information de phase est effectuée dans quatre compteurs CPTZ1, CPTZ2, CPTZ3, CPTZ4, qui accumulent le nombre de transistors par zone. Ces compteurs reçoivent en entrée les signaux FEN2 et FEN1, le signal d'horloge CK et le signal d'horloge inversé CKB. Ils reçoivent aussi les signaux logiques DATA. Chaque comptage est initialisé et autorisé par l'état S2 de la machine d'état. Cet état est l'état d'initialisation des signaux $ar$ et $incf$ en régime normal. Dans cet état, $ar$ signifiant l'autorisation d'accumulation des informations au niveau des compteurs DECODAGEZ1, DECODAGEZ2, DECODAGEZ3, DECODAGEZ4 est à zéro, $infc = 0$ et signifie que l'impulsion qui sert à déterminer l'incrément de fréquence est remis à zéro et pwm_dec signifie que l'état du circuit PWM_DEC est maintenu dans l'état précédent. Le signal ARi signifiant que le niveau de cumul est atteint dans une zone, est activé dès que l'un des compteurs CPTZ1, CPTZ2, CPTZ3 et CPTZ4 atteint une valeur finale autorisant ainsi les tests. Le signal DEPi signifiant que des informations sont présentes dans une zone i sera actif si, durant l'analyse, le compteur associé à la zone concernée a quitté son état initial. Cette analyse est réalisée dans les circuits référencés DECODAGEZ1, DECODAGEZ2, DECODAGEZ3, DECODAGEZ4. Ensuite, une zone de test permet de réaliser les tests mentionnés avec référence à la figure 2, à savoir le TEST4 maintenant la phase, le TEST3 réalisant une diminution du déphasage, le TEST2 réalisant une augmentation du déphasage et le TEST1 entraînant une action sur la fréquence dès que l'état ARi est atteint. En fonction du résultat, le traitement s'orientera soit vers une action de phase, soit vers une action de fréquence. Ainsi, comme représenté sur la figure 3, la sortie du TEST1 correspondant au fait que lorsqu'un circuit plus particulièrement un compteur DECODAGEZi a atteint le niveau d'accumulation, des informations sont présentes dans des zones qui ne sont pas adjacentes, passe par l'état S6 de la machine d'état correspondant à tempo = 1, incf = 1, pwm_dec = pwm = init, ce qui signifie que l'information de fréquence est fausse et la temporisation est armée et est envoyée sur un compteur CPTINCF pour réaliser ultérieurement une action sur la fréquence, tandis que les sorties des TEST2, TEST3 et TEST4 à travers respectivement les états S5, S4, S3 sont envoyés sur un circuit PWM DEC permettant de réaliser un comptage ou un décomptage pour une action sur la phase. De manière plus spécifique, la valeur issue du TEST2 signifiant que lorsqu'un compteur DECODAGEZi a atteint le niveau d'accumulation, des informations sont présentes dans des zones adjacentes, est envoyée sur l'entrée comptage "up", la valeur issue du TEST3 signifiant que lorsqu'un compteur DECODAGEZi a atteint le niveau d'accumulation, des informations sont présentes dans des zones adjacentes, est envoyée sur l'entrée décomptage "down" tandis que la valeur issue du TEST4 signifiant que lorsque le compteur DECODAGEZ4 a atteint le niveau d'accumulation, aucune information n'est présente dans des zones adjacentes, ne modifie pas la valeur du compteur/décompteur PWM_DEC. De plus, le compteur/décompteur PWM_DEC est chargé sur son entrée "load" par les états S1 et S6 et est déclenché par l'information DATA, comme expliqué ultérieurement.

De manière plus détaillée, les différents états Si de la machine d'état représentée à la figure 4 correspondent aux états suivants :

**S1 :** état d'initialisation de la machine d'état. On accède à S1 à la mise sous tension du système.

**S2 :** état d'initialisation des signaux *ar* et *incf* en régime normal. A chaque fois que l'on passe par S2, *ar* et *incf* sont remis à zéro.

**S3 :** lorsque l'on est dans cet état, les informations de phase et de fréquence sont correctes. La temporisation est armée.

**S4 :** lorsque l'on état dans cet état, l'information de fréquence est correcte mais pas celle de phase. Il est nécessaire de diminuer le déphasage. La temporisation est armée.

**S5 :** lorsque l'on est dans cet état, l'information de fréquence est correcte mais pas celle de phase. Il est donc nécessaire d'augmenter le déphasage. La temporisation est armée.

**S6 :** lorsque l'on est dans cet état, l'information de fréquence est fausse et la temporisation est armée.

**S7 :** lorsque l'on est dans cet état, le signal *ar* est mis à 1 et *incf* à 0. Le compteur pwm_dec[] est maintenu dans son état précédent.

**S8 :** lorsque l'on est dans cet état, le signal *ar* est mis à 1 et *incf* à 0. Le compteur pwm_dec[] est maintenu dans son état précédent. En fait; cet état est redondant avec S7 et peut être supprimé.

Conformément à la présente invention, le contrôle de la phase est réalisé en utilisant une modulation de largeur d'impulsion ou PWM. Le signal PWM-OUT généré par le circuit EPLD 5 possède un rapport cyclique variable. De ce signal est extrait par un filtre passe-bas tel que le circuit 10 constitué de manière connue d'une résistance R10 et d'une capacité C10, une composante continue. Le résultat en sortie du filtre 10 est donc une tension continue directement proportionnelle au rapport cyclique du signal. A la place d'un circuit de modulation de largeur d'impulsion, on peut aussi utiliser un convertisseur numérique/analogique série. Ainsi, une modification du rapport cyclique induit une modification du seuil de recoupement du signal d'échantillonnage H IN et se traduit par une modification de la phase du signal en sortie de la PLL1. Comme représenté sur la figure 3, le signal PWM est généré à l'aide de deux compteurs, le compteur/décompteur PWM_DEC et le compteur PWM_CPT qui est un compteur libre comptant entre 0 et 768 par exemple, et qui est initialisé par l'horloge CK. Le compteur/décompteur PWM_DEC couvre la plage 0/255. Il est initialisé au démarrage par l'état S1 et à chaque passage par l'état S6 de la machine d'état. Comme mentionné ci-dessus, l'activation des états S4 ou S5 détermine respectivement soit une incrémentation soit une décrémentation de la valeur précédente du compteur. Le rythme de commutation du compteur est synchrone des signaux DATA et a pour période maximale le cumul des temps d'analyse et de temporisation. Le passage par l'état S3 provoque le maintien de la valeur précédente et le passage par l'état S6 impose le retour à la valeur initiale, soit un rapport cyclique de 50 %. Ce recentrage permet d'éviter un positionnement vers les extrémités qui se traduirait par un état d'instabilité, notamment lorsque le compteur est positionné en 255 et qu'un incrément le ramène à l'état 0. Les signaux issus des circuits PWM_DEC et PWM_CPT sont envoyés en entrée d'un comparateur COMP1 dont la sortie est envoyée sur un circuit T qui reçoit sur son autre entrée la sortie d'un circuit de décodage DEC1 qui positionne le signal PWM_OUT au niveau 1 lorsque le compteur PWM_CPT atteint l'état 256. Le signal PWM_OUT repasse à 0 lorsque les conditions suivantes sont réunis, à savoir le MSB du compteur PWM_CPT est égal à 1 et l'égalité est réalisée entre les 7 bits de poids faibles du compteur PWM_CPT et le compteur PWM_DEC. Le circuit T permet de réaliser une temporisation du signal PWM_OUT de manière à avoir le temps d'appliquer chaque modification sur le déphaseur.

Conformément à la présente invention, la fréquence sera contrôlée par modification du nombre de points du diviseur servant à la PLL1. Dans le circuit EPLD 5, la gestion de la fréquence est réalisée en utilisant deux compteurs CPT PLL et CPT INCF. Le compteur CPT PLL couvre, dans le mode de réalisation représenté, la plage 0,1279 et évolue à chaque transition de l'horloge CK. Il est chargé par l'état S1. Le compteur CPT INCF couvre la plage 0,127 dans le mode de réalisation de la présente invention. Il est initialisé au démarrage par l'état S1 et son rythme de commutation sera synchrone du signal DATA et aura pour période maximale le cumul des temps d'analyse et de temporisation. Comme déjà mentionné, le compteur CPT INCF est incrémenté par une impulsion INCA générée par l'activation de l'état S6 issu du TEST1.

Dans la présente invention, la recherche de fréquence suit un principe différent de celui de la recherche de phase. Dans la recherche de phase, on réalise une sorte d'asservissement, tandis que la recherche de fréquence est de type empirique. Le point de départ est une valeur correspondant au minimum de la plage de capture. Le compteur CPT INCF est incrémenté jusqu'à vérification des critères de phase. D'autre part, le compteur CPT PLL est remis à zéro lorsque les conditions suivantes sont réalisées : les quatre MSB du compteur CPT PLL sont égaux à " 1000 ", l'égalité est réalisée entre les 6 bits de poids faible du compteur CPT PLL et le compteur CPT INCF, cette dernière condition étant vérifiée à chaque cycle du compteur PWM CPT. De même que pour le compteur PWM_DEC, chaque modification de l'état du compteur CPT INCF est gardée pendant un temps minimum correspondant au temps de temporisation, ceci permet donc d'appliquer chaque modification sur le diviseur. D'autre part, comme représenté sur la figure 3, la sortie du compteur CPT PLL est envoyée sur l'entrée d'un circuit de décodage DEC2 qui reçoit aussi en entrée l'horloge CK et sur l'entrée d'un comparateur COMP2, qui reçoit sur son autre entrée la sortie du circuit CPT INCF de manière à réaliser les opérations de comparaison mentionnées ci-dessus. Le comparateur COMP2 reçoit aussi l'horloge CK. La sortie du comparateur COMP2 est envoyée sur l'entrée inversée du compteur CPT PLL. D'autre part, la sortie du circuit de décodage DEC2 donne le signal H LOCK, signal de comparaison de la PLL, qui passe au niveau lorsque le compteur CPT PLL atteint l'état 0. La récurrence de ce signal est directement liée à la durée d'un cycle du compteur CPT PLL. D'autre part, le circuit EPLD de la figure 3 comporte des circuits permettant de générer t'état S8. L'état S8 permet le retour en S2 lorsque la temporisation est écoutée, comme représenté sur la figure 4. Pour cet état, l'information-horloge H, en entrée du circuit EPLD, est envoyée sur un intégrateur 11 donnant en sortie un signal FH. Ce signal est envoyé sur un circuit de temporisation qui est initialement chargé par tes états S3, S4, S5, S6. La sortie du signal de temporisation est envoyée sur un circuit de décodage DEC3 qui reçoit aussi en entrée l'horloge CK. La sortie du circuit de décodage est envoyée sur une bascule D commutée par le signal DATA et, de plus, la sortie du circuit de décodage est rebouchée en entrée du circuit de temporisation.

Différentes modifications et perfectionnements peuvent être apportés au système décrit ci-dessus. Ainsi, l'autorisation du test dépend des états ARi obtenus lorsque l'un des compteurs d'accumulation atteint la valeur VAL FIN qui est fixée par exemple à la valeur 768. Dans ce cas, il est possible de déterminer le temps d'accrochage du système. Ce temps est donné par l'équation suivante :

$$T = (F + P) \times ((\Sigma\ T_D) + 2 \times 10^{-3})$$

dans laquelle F représente te nombre d'incréments nécessaire pour obtenir la bonne fréquence et P représente le nombre d'incréments nécessaire pour obtenir la bonne phase.

E $T_D$ représente le temps nécessaire pour acquérir tes 768 données.

En fait le temps maximal de convergence sera atteint lorsqu'il y aura un seul point par image. Pour une fréquence-image de 50 Hz et pour une fréquence-point située au maximum de la gamme de rattrapage de fréquence et de phase, le temps T est égal à 72 minutes.

Ce temps peut être fortement réduit en adaptant la valeur VAL FIN en fonction du débit d'entrée, à savoir en comptant les événements durant une image. D'autre part, en présence d'un seul point par image, les critères de convergence de phase pourront être respectés, bien que la fréquence soit fausse. Pour une meilleure convergence, une solution simple consiste à utiliser à ta fois les fronts montants et les fronts descendants de l'information. Dans ce cas, la précision est fonction de la largeur de l'impulsion et donc de la position en ligne des événements.

De plus, par détection de standard, à savoir comptage du nombre de lignes par image, il est possible de prépositionner le compteur CPT PLL à une valeur initiale telle que la fréquence obtenue, soit en limite base de la gamme de rattrapage visée. Cette opération permettra donc d'optimiser la vitesse de convergence et de limiter les phénomènes de sous ou sur-échantillonnage.

**Revendications**

**1.** Dispositif de synchronisation d'une horloge d'échantillonnage utilisée pour l'échantillonnage de signaux numériques (DATA) comportant une boucle à verrouillage de phase ou PLL (1) qui multiplie un signal à une fréquence donnée par un nombre entier, la PLL recevant en entrée un signal de référence et donnant en sortie un signal d'horloge, **caractérisé en ce qu'**il comporte des moyens (6) élaborant n zones d'analyse (zone 1, zone 2, zone 3, zone 4) recevant en entrée le signal d'horloge et donnant en sortie des signaux déterminant les n zones d'analyse, des moyens d'analyse (5) recevant en entrée les signaux numériques (DATA) et les signaux (zone 1, zone 2, zone 3, zone 4) déterminant les n zones d'analyse, lesdits moyens d'analyse comparant, pendant un temps déterminé, les signaux numériques aux signaux déterminant les n zones d'analyse, accumulant par zone (CPT21, CPT22, CPT23, CPT24I) les résultats de la comparaison puis testant les résultats des accumulations de manière à envoyer soit un signal de correction de phase en entrée d'un comparateur (9) dont l'autre entrée reçoit le signal de référence et dont la sortie est connectée en entrée de la PLL (1), soit un signal de correction de fréquence envoyée en entrée de la PLL (1) pour modifier le nombre entier.

**2.** Dispositif selon la revendication 1, **caractérisé en ce que** les moyens (6) élaborant n zones d'analyse comportent un circuit en logique combinatoire traitant le signal d'horloge issu de la PLL (1) pour générer des fenêtres en logique combinatoire réalisant les n zones d'analyse.

**3.** Dispositif selon la revendication 2, **caractérisé en ce que** les fenêtres correspondent respectivement aux transitions montantes et descendantes du signal d'horloge.

4. Dispositif selon l'une des revendications 1 à 3, **caractérisé en ce que** les moyens (6) élaborant n zones d'analyse élaborent quatre zones avec une zone correspondant à une transition montante, une zone correspondant à une transition descendante, une zone correspondant à un palier haut et une zone correspondant à un palier bas.

5. Dispositif selon l'une des revendications précédentes, **caractérisé en ce que** les moyens d'analyse sont constitués par un circuit électronique programmable effaçable.

6. Dispositif selon l'une des revendications 1 à 4, **caractérisé en ce que** les moyens d'analyse comportent au moins un compteur (CPT21, CPT22, CPT23, CPT24) pour chaque zone qui accumule le nombre de transitions par zone, chaque compteur étant initialisé en début de temps d'analyse et pouvant compter jusqu'à une valeur d'accumulation maximale, un circuit d'analyse connecté en sortie de chaque compteur et un circuit de test connecté en sortie de l'ensemble des circuits d'analyse, le circuit de test envoyant des signaux vers un compteur (CPT-INCF) dont la sortie est envoyée sur un circuit déterminant la valeur du signal de correction de fréquence et vers un circuit à modulation d'impulsion déterminant la valeur du signal de correction de phase.

7. Dispositif selon la revendication 6, **caractérisé en ce que** le circuit à modulation d'impulsions comporte un compteur/décompteur (PWM-DEC) et un compteur (PWM-CPT) comptant entre 0 et une valeur maximale donnée.

8. Dispositif selon l'une quelconque des revendications précédentes, **caractérisé en ce que** le circuit de test compare les valeurs en sortie de chaque circuit d'analyse et détermine en fonction des valeurs relatives en sortie de deux circuits d'analyse différents ou de la valeur en sortie d'un circuit d'analyse différent d'un circuit d'analyse spécifique correspondant au type de transition choisi, le sens et l'amplitude de la correction de phase ou de fréquence à appliquer sur le signal d'horloge.

9. Dispositif selon l'une des revendications 1 à 8, **caractérisé en ce qu'**il comporte des circuits de mise en forme (2, 3, 4) recevant en entrée les signaux numériques et dont la sortie est connectée à une entrée des moyens d'analyse.

**Claims**

1. Device for synchronisation of a sampling clock used for the sampling of digital signals (DATA) comprising a phase-locked loop PLL (1) that multiplies a signal at a given frequency by a whole number, the PLL receiving at input a reference signal and providing at output a clock signal, **characterized in that** it comprises the means (6) for developing n analysis zones (zone 1, zone 2, zone 3, zone 4) receiving at input the clock signal and providing at output signals determining the n analysis zones, analysis means (5) receiving at input the digital signals (DATA) and the signals (zone 1, zone 2, zone 3, zone 4) determining the n analysis zones, said analysis means comparing, over a determined time, the digital signals with the signals determining the n analysis zones, accumulating per zone (CPT21, CPT22, CPT23, CPT24I) the results of the comparison then testing the results of accumulations in such a way to transmit either a phase correction signal at the input of a comparator (9) for which the other input receives the reference signal and for which the output is connected at input of the PLL (1), or a transmitted frequency correction signal at the input of the PLL (1) to modify the whole number.

2. Device according to claim 1, **characterized in that** the means (6) for developing n analysis zones comprise a combinatory logic circuit processing the clock signal from the PLL (1) to generate windows in combinatory logic producing the n analysis zones.

3. Device according to claim 2, **characterized in that** the windows correspond respectively to the rising and descending transitions of the clock signal.

4. Device according to one of claims 1 to 3, **characterized in that** the means (6) for developing n analysis zones develop four zones with one zone corresponding to a rising transition, one zone corresponding to a descending transition, one zone corresponding to a high level and one zone corresponding to a low level.

5. Device according to one of the preceding claims, **characterized in that** the analysis means are constituted by an erasable programmable electronic circuit.

6. Device according to one of claims 1 to 4, **characterized in that** the analysis means comprises at least one counter (CPT21, GPT22, CPT23, CPT24) for each zone that accumulates the number of transitions per zone, each counter being initialized at the start of the analysis time and being able to count up to a maximal accumulation value, an analysis circuit connected at the output of each counter and a test circuit connected at the output of the set of analysis circuits, the test circuit transmitting signals to a counter (CPT-INCF) of which the output is sent on a circuit determining the value of the frequency correction signal and to a pulse modulation circuit determining the value of the phase correction signal.

**7.** Device according to claim 6, **characterized in that** the pulse modulation circuit comprises an up/down counter (PWM-DEC) and a counter (PWM-CPT) counting between 0 and a given maximal value.

**8.** Device according to any one of the preceding claims, **characterized in that** the test circuit compares the values at output of each analysis circuit and determines according to relative values at the output of two different analysis circuits or from the value at output of an analysis circuit different from a specific analysis circuit corresponding to the selected transition type, the direction and amplitude of the frequency or phase corrections to be applied to the clock signal.

**9.** Device according to one of claims 1 to 8, **characterized in that** it comprises formatting circuits (2, 3, 4) receiving at input digital signals and for which the output is connected to an input of 5 analysis means.

**Patentansprüche**

**1.** Vorrichtung zur Synchronisierung eines Abtasttaktes, der zum Abtasten digitaler Signale (DATA) verwendet wird, mit einer Phase Locked Loop bzw. PLL (1), die ein Signal bei einer vorgegebenen Frequenz mit einer Ganzzahl multipliziert, wobei die PLL eingangsseitig ein Referenzsignal empfängt und ausgangsseitig ein Taktsignal ausgibt, **dadurch gekennzeichnet, dass** sie Mittel (6) umfasst, die n Analysebereiche (Bereich 1, Bereich 2, Bereich 3, Bereich 4) erstellen, welche eingangsseitig das Taktsignal empfangen und ausgangsseitig die n Analysebereiche bestimmende Signale ausgeben, Analysemittel (5), die eingangsseitig die digitalen Signale (DATA) und die die n Analysebereiche bestimmenden Signale (Bereich 1, Bereich 2, Bereich 3, Bereich 4) empfangen, wobei die Analysemittel während einer bestimmten Zeit die digitalen Signale mit den die n Analysebereiche bestimmenden Signalen vergleichen, bereichsweise (CPT21, CPT22, CPT23, CPT24) die Ergebnisse des Vergleichs akkumulieren und die Ergebnisse der Akkumulierungen testen, so dass entweder ein Phasenkorrektursignal dem Eingang eines Komparators (9) zugeführt wird, dessen anderer Eingang das Referenzsignal empfängt und dessen Ausgang mit dem Eingang der PLL (1) verbunden ist, oder ein Frequenzkorrektursignal dem Eingang der PLL (1) zugeführt wird, um die Ganzzahl zu ändern.

**2.** Vorrichtung nach Anspruch 1, **dadurch gekennzeichnet, dass** die n Analysebereiche erstellenden Mittel (6) eine Schaltung der kombinatorischen Logik umfassen, die das Taktsignal aus der PLL (1) verarbeitet, um Fenster der kombinatorischen Logik zu erzeugen, welche die n Analysebereiche realisieren.

**3.** Vorrichtung nach Anspruch 2, **dadurch gekennzeichnet, dass** die Fenster den steigenden beziehungsweise fallenden Flanken des Taktsignals entsprechen.

**4.** Vorrichtung nach einem der Ansprüche 1 bis 3, **dadurch gekennzeichnet, dass** die n Analysebereiche erstellenden Mittel (6) vier Bereiche - einen einer steigenden Flanke entsprechenden Bereich, einen einer fallenden Flanke entsprechenden Bereich, einen einem oberen Plateau entsprechenden Bereich und einen einem unteren Plateau entsprechenden Bereich - erstellen.

**5.** Vorrichtung nach einem der vorhergehenden Ansprüche, **dadurch gekennzeichnet, dass** die Analysemittel durch eine löschbare programmierbare elektronische Schaltung gebildet sind.

**6.** Vorrichtung nach einem der Ansprüche 1 bis 4, **dadurch gekennzeichnet, dass** die Analysemittel mindestens einen Zähler (CPT21, CPT22, CPT23, CPT24) für jeden Bereich umfassen, der die Anzahl der Flanken je Bereich akkumuliert, wobei jeder Zähler zu Beginn der Analysezeit initialisiert wird und bis zu einem maximalen Akkumulatorwert zählen kann, eine mit dem Ausgang jedes Zählers verbundene Analyseschaltung und eine mit dem Ausgang der Gesamtheit der Analyseschaltungen verbundene Testschaltung, wobei die Testschaltung Signale an einen Zähler (CPT-INCF) sendet, dessen Ausgang einer Schaltung, die den Wert des Frequenzkorrektursignals bestimmt, und einer Impulsmodulationsschaltung, die den Wert des Phasenkorrektursignals bestimmt, zugeführt wird.

**7.** Vorrichtung nach Anspruch 6, **dadurch gekennzeichnet, dass** die Impulsmodulationsschaltung einen Auf-/Abwärtszähler (PWM-DEC) und einen zwischen 0 und einem vorgegebenen maximalen Wert zählenden Zähler (PWM-CPT) umfasst.

**8.** Vorrichtung nach einem der vorhergehenden Ansprüche, **dadurch gekennzeichnet, dass** die Testschaltung die Werte am Ausgang jeder Analyseschaltung vergleicht und in Abhängigkeit von den relativen Werten am Ausgang zweier unterschiedlicher Analyseschaltungen oder von dem Wert am Ausgang einer Analyseschaltung, die sich von einer dem gewählten Flankentyp entsprechenden spezifischen Analyseschaltung unterscheidet, die Richtung und die Amplitude der auf das Taktsignal anzuwendenden Phasen- bzw. Frequenzkorrektur bestimmt.

9. Vorrichtung nach einem der Ansprüche 1 bis 8, **dadurch gekennzeichnet, dass** sie Formungsschaltungen (2, 3, 4) umfasst, die eingangsseitig die digitalen Signale empfangen und deren Ausgang mit einem Eingang der Analysemittel verbunden ist.

**FIG.1**

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0020205 A
- WO 9119358 A
- EP 0812079 A